(19) Europäisches Patentamt
European Patent Office
Office européen des brevets

(11) **EP 1 308 751 B1**

(12) **EUROPÄISCHE PATENTSCHRIFT**

(45) Veröffentlichungstag und Bekanntmachung des Hinweises auf die Patenterteilung:
**04.07.2012   Patentblatt 2012/27**

(51) Int Cl.:
*G01S 13/46* ^(2006.01)   *G01S 13/93* ^(2006.01)

(21) Anmeldenummer: **02017882.8**

(22) Anmeldetag: **09.08.2002**

(54) **Verfahren zum Betreiben eines Nahbereichserkennungssystems**

Method for operating a short range object recognition system

Méthode pour mise en opération d'un système pour récogniser des objets à courte distance

(84) Benannte Vertragsstaaten:
**AT BE BG CH CY CZ DE DK EE ES FI FR GB GR IE IT LI LU MC NL PT SE SK TR**

(30) Priorität: **20.10.2001   DE 10151965**

(43) Veröffentlichungstag der Anmeldung:
**07.05.2003   Patentblatt 2003/19**

(73) Patentinhaber: **Valeo Schalter und Sensoren GmbH**
**74321 Bietigheim-Bissingen (DE)**

(72) Erfinder: **Gotzig, Heinrich, Dr.**
**74081 Heilbronn (DE)**

(74) Vertreter: **Pothmann, Karsten et al**
**Valeo Schalter und Sensoren GmbH**
**74319 Bietigheim-Bissingen (DE)**

(56) Entgegenhaltungen:
**EP-A- 1 278 076     WO-A-00/00788**
**US-A- 5 040 116     US-B1- 6 266 005**

**Beschreibung**

Die Erfindung betrifft ein Verfahren zum Betreiben eines Nahbereicherkennungssystems eines Fahrzeuges. Solche Systeme erfassen den Abstand von in dem Detektionsbereich des Systems, bzw. von Sensoren des Systems, auftretenden Objekten und Hindernissen zu Fahrzeugen. Sie finden insbesondere als Parkhilfen für Fahrzeuge Verwendung, wobei dem Fahrzeuglenker der Abstand von Hindernissen oder Objekten in dem Nahbereich des Fahrzeuges mitgeteilt wird.

Es ist wünschenswert, dass Nahbereicherkennungssysteme nur solche Gegenstände anzeigen, die tatsächlich mit dem Fahrzeug kollidieren können. Bekannte Systeme erkennen sämtliche Gegenstände oder Objekte im Detektionsbereich. Dabei wird nicht unterschieden, ob aufgrund des erfassten Gegenstandes tatsächlich eine Kollisionsgefahr mit dem Fahrzeug besteht. Insbesondere ungünstige Fahrbahnbeläge, wie beispielsweise Kies oder Schotter, und Gegenstände mit geringer Höhe, wie beispielsweise Bordsteinkanten, werden von bekannten Nahbereicherkennungssystemen erfasst und als Kollisionshindernis dem Fahrer mitgeteilt.

Aus der US 6,266,005 B1 ist ein Radar-Signal-Verarbeitungsverfahren bekannt geworden, bei dem über eine zeitliche Veränderung des Objekts von der Radaranordnung und über eine Intensitätsmodulation auf die Höhe des Objekts rückgeschlossen wird.

Aus der WO00/00788 ist ein Verfahren bekannt geworden, mit dem die Höhe von zwei fernliegenden Objekten bestimmt wird.

Der vorliegenden Erfindung liegt die Aufgabe zugrunde, ein Verfahren zum Betreiben eines Nahbereicherkennungssystems sowie ein Nahbereicherkennungssystem vorzuschlagen, welches die genannten Nachteile des bekannten Standes der Technik nicht aufweist. Insbesondere soll auf einfache Art und Weise bestimmt werden können, ob erfasste Gegenstände und Objekte dazu geeignet sind, mit dem Fahrzeug tatsächlich zu kollidieren.

Diese Aufgabe wird mit einem Verfahren mit den Merkmalen des Anspruchs 1 gelöst.

Die Höhe des Sensors $z_1$ ist eine feste Größe. Der radiale Abstand $r_{1A}$ des Sensors in einer Position $S_1$ zu dem Objekt A kann auf einfache Art und Weise bestimmt werden. Ist der Sensor S beispielsweise als Ultraschallsensor ausgebildet, so kann über die Laufzeit des ausgesendeten und empfangenen Signals der Abstand $r_{1A}$ bestimmt werden. Entsprechendes gilt für den radialen Abstand $r_{2A}$. Der zurückgelegte Weg $\Delta_{Fahrzeug}$ zwischen den Positionen $S_1$ und $S_2$ kann beispielsweise über geeignete Sensoren bestimmt werden, die die jeweils aktuelle Fahrzeugposition bestimmen. Ferner kann bei bekannten Positionen $S_1$ und $S_2$ der zurückgelegte Weg $\Delta_{Fahrzeug}$ auch berechnet werden.

Zur Bestimmung der Höhe $\tilde{z}_A$ bzw. der Höhendifferenz $z_1 - \tilde{z}_A$ wird vorteilhafterweise Gleichung (2) und (3) in Gleichung (1) eingesetzt und Gleichung (1) nach $\tilde{z}_A$ aufgelöst. Ober die genannten Gleichungen kann folglich mit relativ wenig Rechenaufwand die gewünschte Höhe $\tilde{z}_A$ bzw. die Höhendifferenz $z_1 - \tilde{z}_A$ bestimmt werden.

Über das erfindungsgemäße Verfahren kann folglich die Höhe $\tilde{z}_A$ des sich in dem Detektionsbereich befindenden Objekts A bestimmt werden. Bei bekannter Kollisionshöhe, die zu Beschädigungen an dem Fahrzeug führt, kann über eine entsprechende Auswertelogik bestimmt werden, ob es zu einer Kollision des Gegenstandes mit dem Fahrzeug, sprich zu einer Fahrzeugbeschädigung, kommt, oder ob das Fahrzeug über das Objekt A hinweg fahren kann. Dabei kann über die Auswertelogik auch entschieden werden, ob dem Fahrzeuglenker das Vorhandensein von Objekt A mitgeteilt wird oder nicht. Handelt es sich beim dem Objekt A beispielsweise um einen nicht kollisionsrelevanten Bordstein, so muss dies dem Fahrzeuglenker nicht zwingend mitgeteilt werden. Handelt es sich im Gegensatz hierzu bei dem Objekt A um ein kollisionsrelevantes Hindernis, so ist dies dem Fahrzeuglenker anzuzeigen.

Ein vorteilhaftes Verfahren ergibt sich aus den Merkmalen des Anspruchs 2. Bei diesem Verfahren werden zwei Objekte A und B betrachtet und die erfassten Daten werden miteinander in Beziehung gesetzt. Über die genannten mathematischen Beziehungen kann folglich die gesuchte Höhe der Objekte A und B auf einfache Art und Weise bestimmt werden.

Ferner wird die eingangs genannte Aufgabe durch ein Nahbereicherkennungssystem mit wenigstens einem Sensor und mit einem Steuer- und/oder Regelgerät gelöst, dass sich dadurch kennzeichnet, dass das Steuer- und/oder Regelgerät zur Durchführung des erfindungsgemäßen Verfahrens geeignet ist.

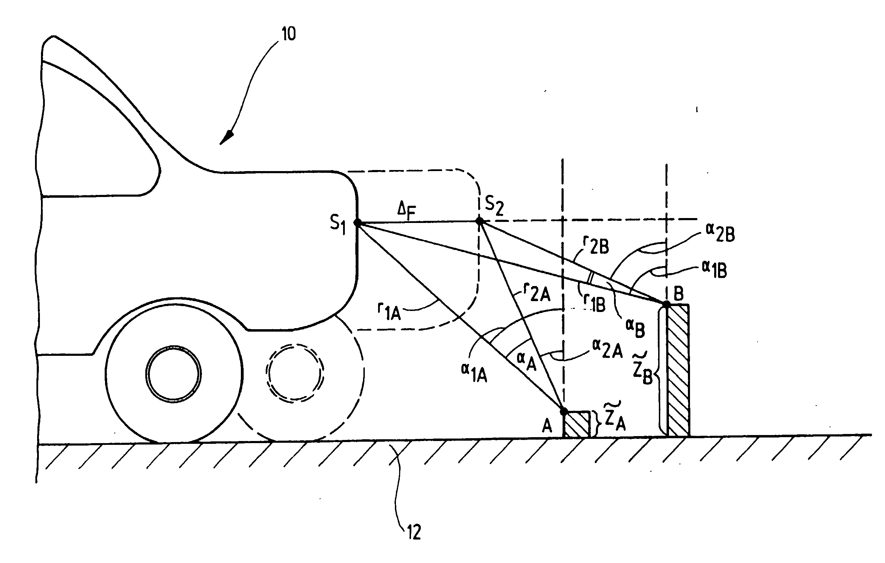

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

In der Figur ist ein Fahrzeug 10 beispielhaft dargestellt, das sich auf einem Untergrund 12 rückwärts bewegt. Die Position 1 des Fahrzeuges 10 ist hierbei voll ausgezeichnet. Die Position 2 des Fahrzeuges, zu einem späteren Zeitpunkt, ist gestrichelt angedeutet. Das Fahrzeug weist an seinem Heck Sensoren S eines Nahbereicherkennungssystems auf. In der Position 1 sind die Sensoren mit $S_1$ bezeichnet. In der Position 2 befinden sich die Sensoren S in der in der Figur mit $S_2$ dargestellten Position.

In dem Detektionsbereich der Sensoren S befinden sich zwei Objekte A und B. Bestimmt werden soll die Höhe $\tilde{z}_A$ des Objekts A und die Höhe $\tilde{z}_B$ des Objekts B.

Es gelten folgende mathematische Beziehungen:

Sensor in der Position 1:

$$S_1 : \begin{pmatrix} x_1 \\ y_1 \\ z_1 \end{pmatrix} \qquad (10)$$

Sensor in der Position 2:

$$S_2 : \begin{pmatrix} x_2 \\ y_2 \\ z_2 \end{pmatrix} \qquad (11)$$

wobei:

$$z_1 = z_2 \qquad (12)$$

Objekt A weist folgende Koordinaten auf:

$$A : \begin{pmatrix} \widetilde{x}_A \\ \widetilde{y}_A \\ \widetilde{z}_A \end{pmatrix} \qquad (13)$$

Objekt B weist folgende Koordinaten auf:

$$B : \begin{pmatrix} \widetilde{x}_B \\ \widetilde{y}_B \\ \widetilde{z}_B \end{pmatrix} \qquad (14)$$

Der radiale Abstand $r_{1A}$ von Position $S_1$ zu Objekt A beträgt:

$$r_{1A} = \sqrt{(\widetilde{x}_A - x_1)^2 + (\widetilde{y}_A - y_1)^2 + (\widetilde{z}_A - z_1)^2} \qquad (15)$$

Der radiale Abstand $r_{2A}$ von Position $S_2$ zu Objekt A beträgt:

$$r_{2A} = \sqrt{(\widetilde{x}_A - x_2)^2 + (\widetilde{y}_A - y_2)^2 + (\widetilde{z}_A - z_2)^2} \qquad (16)$$

Zwischen Position $S_1$ und $S_2$ legt das Fahrzeug die Strecke $\Delta_{Fahrzeug}$ zurück, mit:

$$\Delta_{Fahrzeug} = \sqrt{(x_2 - x_1)^2 + (y_2 - y_1)^2} \qquad (17)$$

Der Sensor verändert gegenüber den Positionen 1 und 2 seine Lage um den Abstand:

$$\Delta_{Abstand(Sensor)} = r_{2A} - r_{1A} = \sqrt{(\tilde{x}_A - x_2)^2 + (\tilde{y}_A - y_2)^2 + (\tilde{z}_A - z_2)^2} -$$

$$\sqrt{(\tilde{x}_A - x_1)^2 + (\tilde{y}_A - y_1)^2 + (\tilde{z}_A - z_1)^2} \quad (18),$$

Folgende Lösungsansätze zur Bestimmung der gesuchten Höhen sind unter anderen Lösungsansätzen erfindungsgemäß denkbar:

**Lösungsansatz 1:**

Aufgrund von Messungen bekannte Größen: $\Delta_{Fahrzeug}$, $r_{1A}$, $r_{2A}$, $z_1 = z_2$.
Zu bestimmende Größen: Die Höhe des Objekts A $\tilde{z}_A$ bzw. die Höhendifferenz von Objekt A zu dem Sensor: $z_1 - \tilde{z}_A$.

Relevante mathematische Beziehungen:

$$\Delta^2_{Fahrzeug} = r_{1A}^2 + r_{2A}^2 - 2 \cdot r_{1A} \cdot r_{2A} \cdot \cos(\alpha_1), \quad \text{wobei} \quad \alpha_1 = \alpha_{1A} - \alpha_{2A} \quad (1)$$

$$\alpha_{1A} = \text{acos}\left(\frac{z_1 - \tilde{z}_A}{r_{1A}}\right) \qquad (2)$$

$$\alpha_{2A} = \text{acos}\left(\frac{z_1 - \tilde{z}_A}{r_{2A}}\right) \qquad (3)$$

Hierbei werden die Gleichungen 2 und 3 in die Gleichung 1 eingesetzt. Gleichung 1 wird dann nach $z_1 - \tilde{z}_A$ gelöst.

**Lösungsansatz 2:**

Aufgrund von Messungen bekannte Größen: $r_{1A}$, $r_{2A}$, $r_{1B}$, $r_{2B}$. Zu bestimmende Größen: $\tilde{z}_A$, $\tilde{z}_B$ bzw. Höhendifferenz Objekt A und B zu Sensor $S_1$ und $S_2$ $z_1 - \tilde{z}_A$ , $z_1 - \tilde{z}_B$.

Relevante mathematische Beziehungen:

$$\Delta^2_{Fahrzeug} = r_{1A}^2 + r_{2A}^2 - 2 \cdot r_{1A} \cdot r_{2A} \cdot \cos(\alpha_{1A} - \alpha_{2A}) \qquad (4)$$

$$\Delta^2_{Fahrzeug} = r_{1B}^2 + r_{2B}^2 - 2 \cdot r_{1B} \cdot r_{2B} \cdot \cos(\alpha_{1B} - \alpha_{2B}) \tag{5}$$

$$\alpha_{1A} = \mathrm{acos}\left(\frac{z_1 - \tilde{z}_A}{r_{1A}}\right) \tag{6}$$

$$\alpha_{1B} = \mathrm{acos}\left(\frac{z_1 - \tilde{z}_B}{r_{1B}}\right) \tag{7}$$

$$\alpha_{2A} = \mathrm{acos}\left(\frac{z_1 - \tilde{z}_A}{r_{2A}}\right) \tag{8}$$

$$\alpha_{2B} = \mathrm{acos}\left(\frac{z_1 - \tilde{z}_B}{r_{2B}}\right) \tag{9}$$

Hierbei werden die Gleichungen (6) bis (9) in die Gleichungen (4) und (5) eingesetzt, die dann nach $z_1$-$\tilde{z}_A$ bzw. $z_1$-$\tilde{z}_B$ aufgelöst werden.

Bei bekannter Höhe der Objekte A und B kann über eine Auswertelogik eines Steuer- und Regelgeräts bestimmt werden, ob eine Kollision mit dem Gegenstand A bzw. B zu einer Beschädigung des Fahrzeugs führt. In der Figur stellt das Objekt A kein kollisionsrelevantes Hindernis dar. Aufgrund der geringe Höhe, des Objekts A wird des vom Fahrzeug überfahren. Das Vorhandensein des Objektes A muss deshalb nicht zwingend dem Fahrer mitgeteilt werden.

Anders verhält es sich mit dem Objekt B. Bei einer Kollision des Fahrzeuges mit dem Objekt B kommt es zu einer Fahrzeugbeschädigung. Deshalb wird dem Fahrzeuglenker das Vorhandensein des Objekts B mitgeteilt.

Als Sensoren eignen sich insbesondere Ultraschallsensoren. Denkbar ist auch die Verwendung von Radar-, Laser- oder anderen Sensoren.

**Patentansprüche**

1.   Verfahren zum Betreiben eines Nahbereichserkennungssystems eines Fahrzeuges (10), wobei die Höhe $\tilde{z}_A$ eines sich in dem Detektionsbereich wenigstens eines Sensors S befindenden Objekts A, oder die Höhendifferenz $z_1$-$\tilde{z}_A$ zwischen dem Objekt A und dem Sensor S, wobei $z_1$ die Höhe des Sensors S ist, bestimmt wird, aus den folgenden Messgrößen:

- radialer Abstand $r_{1A}$ des Sensors S in einer Position $S_1$ zu dem Objekt A,
- radialer Abstand $r_{2A}$ des Sensors S zu dem Objekt A in einer der Position $S_1$ verschiedenen Position $S_2$, und unter Verwendung folgender Gleichungen mit dem über Sensoren bestimmbaren zurückgelegten Weg $\Delta_{Fahrzeug}$ des Fahrzeuges zwischen den Sensorpositionen $S_1$ und $S_2$

$$\Delta^2_{Fahrzeug} = r_{1A}^2 + r_{2A}^2 - 2 \cdot r_{1A} \cdot r_{2A} \cdot \cos(\alpha_{1A} - \alpha_{2A}) \tag{1}$$

$$\alpha_{1A} = \mathrm{acos}\left(\frac{z_1 - \tilde{z}_A}{r_{1A}}\right) \qquad\qquad (2)$$

$$\alpha_{2A} = \mathrm{acos}\left(\frac{z_1 - \tilde{z}_A}{r_{2A}}\right) \qquad\qquad (3),$$

wobei die Gleichungen nach der Höhe $\tilde{z}_A$ oder nach der Höhendifferenz $z_1\text{-}\tilde{z}_A$ aufgelöst werden.

**2.** Verfahren nach Anspruch 1, **dadurch gekennzeichnet, dass** neben der Höhe $\tilde{z}_A$ auch die Höhe $\tilde{z}_B$ eines weiteren sich in dem Detektionsbereich des Sensors S befindenden Objekts B, bzw. neben der Höhendifferenz $z_1\text{-}\tilde{z}_A$ auch die Höhendifferenz $z_1\text{-}\tilde{z}_B$ zwischen dem Sensor S und dem Objekt B bestimmt wird, aus den weiteren Messgrößen:

- radialer Abstand $r_{1B}$ des Sensors zu dem Objekt B in der Sensorposition $S_1$, und
- radialer Abstand $r_{2B}$ des Sensors zu dem Objekt B in der Sensorposition $S_2$, und
  unter Verwendung folgender weiterer Gleichungen:

$$\Delta^2_{Fahrzeug} = r_{1B}^2 + r_{2B}^2 - 2 \cdot r_{1B} \cdot r_{2B} \cdot \cos\left(\alpha_{1B} - \alpha_{2B}\right) \qquad\qquad (5)$$

$$\alpha_{1B} = \mathrm{acos}\left(\frac{z_1 - \tilde{z}_B}{r_{1B}}\right) \qquad\qquad (7)$$

$$\alpha_{2B} = \mathrm{acos}\left(\frac{z_1 - \tilde{z}_B}{r_{2B}}\right) \qquad\qquad (9)$$

wobei die Gleichungen nach der Höhe $\tilde{z}_B$ oder nach der Höhendifferenz $z_1\text{-}\tilde{z}_B$ aufgelöst werden.

**3.** Nahbereichserkennungssystem mit wenigstens einem Sensor und mit einem Steuer- und/oder Regelgerät, **dadurch gekennzeichnet, dass** das Steuer- und/oder Regelgerät nach dem Verfahren gemäß wenigstens einem der vorhergehenden Ansprüchen betrieben wird.

**Claims**

**1.** Method for operating a short-range detection system of a vehicle (10),
the height $\tilde{z}_A$ of an object A located in the detection area of at least one sensor S, or the height difference $z_1\text{-}\tilde{z}_A$ between the object A and the sensor S, where $z_1$ is the height of the sensor S, being determined,
by using the following measured variables:

- radial distance $r_{1A}$ of the sensor S at a position $S_1$ relative to the object A,
- radial distance $r_{2A}$ of the sensor S relative to the object A at a position $S_2$ different from the position $S_1$, and
  by using the following equations with the path $\Delta_{\text{vehicle}}$, determinable via sensors, covered by the vehicle between the sensor positions $S_1$ and $S_2$:

$$\Delta^2_{vehicle} = r_{1A}^2 + r_{2A}^2 - 2 \cdot r_{1A} \cdot r_{2A} \cdot \cos\left(\alpha_{1A} - \alpha_{2A}\right) \qquad\qquad (1)$$

$$\alpha_{1A} = \mathrm{acos}\left(\frac{z_1 - \widetilde{z}_A}{r_{1A}}\right) \qquad (2)$$

$$\alpha_{2A} = \mathrm{acos}\left(\frac{z_1 - \widetilde{z}_A}{r_{2A}}\right) \qquad (3),$$

the equations being solved for the height $\widetilde{z}_A$ or for the height difference $z_1\text{-}\widetilde{z}_A$.

2. Method according to Claim 1, **characterized in that** in addition to the height $\widetilde{z}_A$, the height $\widetilde{z}_B$ of a further object B located in the detection area of the sensor S is also determined, and/or in addition to the height difference $z_1\text{-}\widetilde{z}_A$, the height difference $z_1\text{-}\widetilde{z}_B$ between the sensor S and the object B is also determined, the operation being performed by using the further measured variables:

   - radial distance $r_{1B}$ of the sensor relative to the object B at the sensor position $S_1$, and
   - radial distance $r_{2B}$ of the sensor relative to the object B at the sensor position $S_2$, and

   by using the following further equations:

$$\Delta^2_{vehicle} = r_{1B}^2 + r_{2B}^2 - 2 \cdot r_{1B} \cdot r_{2B} \cdot \cos\left(\alpha_{1B} - \alpha_{2B}\right) \qquad (5)$$

$$\alpha_{1B} = \mathrm{acos}\left(\frac{z_1 - \widetilde{z}_B}{r_{1B}}\right) \qquad (7)$$

$$\alpha_{2B} = \mathrm{acos}\left(\frac{z_1 - \widetilde{z}_B}{r_{2B}}\right) \qquad (9)$$

the equations being solved for the height $\widetilde{z}_B$ or for the height difference $z_1\text{-}\widetilde{z}_B$.

3. Short-range detection system having at least one sensor and having a control and/or regulating unit, **characterized in that** the control and/or regulating unit is operated using the method in accordance with at least one of the preceding claims.

**Revendications**

1. Procédé d'exploitation d'un système de reconnaissance d'objet à courte distance d'un véhicule (10), dans lequel on détermine la hauteur $\widetilde{Z}_A$ d'un objet A se trouvant dans le domaine de détection d'au moins un capteur S, ou la différence de hauteur $Z_1\text{-}\widetilde{Z}_A$ entre l'objet A et le capteur S, $Z_1$ étant la hauteur du capteur S, à partir grandeurs mesurées suivantes :

   - distance radiale $r_{1A}$ du capteur S dans une position $S_1$ à l'objet A,
   - distance radiale $r_{2A}$ du capteur S à l'objet A dans une position $S_2$ différente de la position $S_1$, et

   en utilisant les équations suivantes avec le chemin parcouru par le véhicule $\Delta_{\text{véhicule}}$ déterminable au moyen de capteurs, entre les positions de capteurs $S_1$ et $S_2$ :

$$\Delta^2_{v\acute{e}hicule} = r_{1A}^2 + r_{2A}^2 - 2 \cdot r_{1A} \cdot r_{2A} \cdot \cos(\alpha_{1A} - \alpha_{2A}) \qquad (1)$$

$$\alpha_{1A} = a\cos\left(\frac{z_1 - \tilde{z}_A}{r_{1A}}\right) \qquad (2)$$

$$\alpha_{2A} = a\cos\left(\frac{z_1 - \tilde{z}_A}{r_{2A}}\right) \qquad (3),$$

les équations étant résolues en fonction de la hauteur $Z_A$ ou en fonction de la différence de hauteur $Z_1$-$Z_A$.

**2.** Procédé selon la revendication 1, **caractérisé en ce qu'**en plus de la hauteur $\tilde{Z}_A$, on détermine également la hauteur $Z_B$ d'un autre objet B se trouvant dans le domaine de détection du capteur S, respectivement en plus de la différence de hauteur $Z_1$-$Z_A$, également la différence de hauteur $Z_1$-$Z_B$ entre le capteur S et l'objet B, à partir autres grandeurs mesurées suivantes :

   - distance radiale $r_{1B}$ du capteur à l'objet B dans une position de capteur $S_1$, et
   - distance radiale $r_{2B}$ du capteur à l'objet B dans une position de capteur $S_2$, et

en utilisant les autres équations suivantes :

$$\Delta^2_{v\acute{e}hicule} = r_{1B}^2 + r_{2B}^2 - 2 \cdot r_{1B} \cdot r_{2B} \cdot \cos(\alpha_{1B} - \alpha_{2B}) \qquad (5)$$

$$\alpha_{1B} = a\cos\left(\frac{z_1 - \tilde{z}_B}{r_{1B}}\right) \qquad (7)$$

$$\alpha_{2B} = a\cos\left(\frac{z_1 - \tilde{z}_B}{r_{2B}}\right) \qquad (9)$$

les équations étant résolues en fonction de la hauteur $Z_B$ ou en fonction de la différence de hauteur $Z_1$-$Z_B$.

**3.** Système de reconnaissance d'objet à courte distance avec au moins un capteur et avec un appareil de commande et/ou de régulation, **caractérisé en ce que** l'appareil de commande et/ou de régulation selon le procédé est exploité selon au moins une des revendications précédentes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6266005 B1

- WO 0000788 A